# EUROPÄISCHE PATENTSCHRIFT

(11) **EP 0 721 689 B1**
(45) Veröffentlichungstag und Bekanntmachung des Hinweises auf die Patenterteilung: **20.05.1998**
(21) Anmeldenummer: 94926806.4
(22) Anmeldetag: 22.09.1994
(51) Int. Cl.: H02J 13/00

(54) **VERFAHREN ZUM HILFSBETRIEB EINES RUNDSTEUERGERÄTES**
AUXILIARY OPERATION PROCESS FOR RIPPLE-CONTROL EQUIPMENT
PROCEDE PERMETTANT DE FAIRE FONCTIONNER EN MODE DE SECOURS UN APPAREIL A TELECOMMANDE CENTRALISEE

(30) Priorität: 30.09.1993 DE 4333438
(43) Veröffentlichungstag der Anmeldung: 17.07.1996
(73) Patentinhaber: SIEMENS AKTIENGESELLSCHAFT, 80333 München (DE)
(72) Erfinder: SCHULTE, Reinhold, D-91058 Erlangen (DE)
(86) Internationale Anmeldenummer: DE9401102
(87) Internationale Veröffentlichungsnummer: WO9509472

(56) Entgegenhaltungen:
- EP-A- 0 388 672
- DE-U- 9 314 865
- DE-U- 9 314 866
- HITACHI REVIEW, Bd.40, Nr.5, Oktober 1991, TOKYO, JP, Seiten 359 - 366; FUJIKAWA ET AL.: 'Operation and diagnosis assisting system for substations'
- IEEE TRANSACTIONS ON POWER DELIVERY, Bd.8, Nr.1, Januar 1993, NEW YORK, US, Seiten 56 - 65; KUMANO ET AL.: 'Development of expert system for operation at substation'

## Beschreibung

Die Erfindung betrifft ein Verfahren zum Betrieb eines Rundsteuergerätes, dem Rundsteuerbefehle zugeführt werden, und das zugehörige Rundsteuergerät.

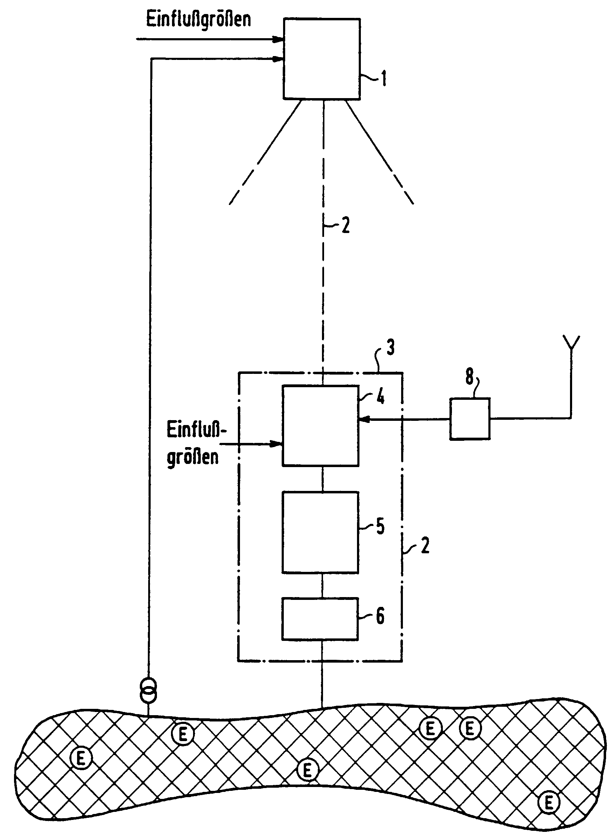

Zum Steuern von Verbrauchern in elektrischen Versorgungsnetzen wird oft von der sogenannten Rundsteuerung Gebrauch gemacht. Auf diese Weise ist eine Energieregelung im Netz möglich. Durch das gezielte Ein- und Abschalten von einzelnen Verbrauchern können nämlich in der Belastungskurve eines Versorgungsnetzes beispielsweise Spitzen abgesenkt und Täler aufgefüllt werden. Die Einflußgrößen für den Energieverbrauch in einem elektrischen Netz sind sehr umfangreich. In der Veröffentlichung "Energiekostensenkung durch Energieregelung und Rundsteuertechnik" aus ETZ, Band 109 (1988), Heft 5, Seiten 210 bis 214 sind zumindest die wesentlichen Einflußgrößen im Bild 4 dargestellt.

Die Abgabe eines Rundsteuerbefehls erfolgt in der Regel von einer zentrale Warte über ein Rundsteuerkommandogerät. Der Rundsteuerbefehl wird dann über einen geeigneten Informationsübertragungsweg zur Rundsteuerunterstation übertragen. Von dort wird der Befehl dann mittels eines Rundsteuersenders über eine Ankopplungseinrichtung in das elektrische Versorgungsnetz eingespeist. Das elektrische Versorgungsnetz dient dann wiederum als Übertragungsweg für den Rundsteuerbefehl. Unter Umständen kann es dabei vorkommen, daß einer der Informationsübertragungswege gestört ist, so daß die Rundsteuerunterstation oder die Rundsteuerempfänger den Rundsteuerbefehl nicht erhalten. In der Vergangenheit wurden in diesem Fall Hilfsroutinen in den empfangenen Gerät gestartet, welche nach einem fest vorgegebenen Muster, insbesondere einem starren Zeitplan, die zu steuernden Verbraucher im wesentlichen in einem festen Zeitrhythmus ein- oder ausschalteten.

In der älteren, nichtvorveröffentlichten DE 93 14 866 U wird eine Rundsteueranordnung mit einer Steuereinrichtung vorbeschrieben, welche die Steuersignale für eine Rundsteuersendeanlage erzeugt, welche mit einem elektrischen Versorgungsnetz verbunden ist, wobei im Versorgungsnetz an einer vorgebbaren Stelle das Rundsteuersignal erfaßt und ein entsprechendes Meßsignal zur Steuereinrichtung zurückgeführt wird und bei einer Abweichung des Signals von einem vorgegebenen Wert eine Nachführung des Steuersignals erfolgt. Weiterhin ist aus der Zeitschrift "Hitachi Review" 40 (1991), Seiten 359 bis 366 ein Hilfssystem für Rundsteuergeräte bekannt, bei dem sogenannte intelligente Funktionen zum Verhindern von Fehlsteuerungen vorgesehen sind.

Demgegenüber liegt der Erfindung die Aufgabe zugrunde, eine verbesserte Energieregelung bei Ausfall der Rundsteuerbefehlsübertragung zu ermöglichen.

Die Lösung der Aufgabe gelingt mit den Merkmalen des Patentanspruches 1. Ein zugehöriges Rundsteuergerät ist durch die Merkmale des Patentanspruches 9 charakterisiert.

Im Rahmen der Erfindung wurde festgestellt, daß ein wesentlich verbesserter Hilfsbetrieb für Rundsteuergeräte möglich ist. Der Hilfsbetrieb orientiert sich dabei an den in der Vergangenheit übertragenen Rundsteuerbefehlen. Die Rundsteuerbefehle werden nach Art einer Häufigkeitsberechnung statistisch ausgewertet, wobei beispielsweise in einer Rundsteuerunterstation die Häufigkeit eines Rundsteuerbefehls überwacht und eine qualitative Auswertung durchgeführt wird. Bei Veränderung des Lastverhaltens im Versorgungsnetz z. B. durch Klimaänderungen, wird dieses durch das Rundsteuergerat selbständig durch die statistische Auswertung festgestellt und kann dadurch den Hilfsbetrieb entsprechend anpassen. Dabei kann bevorzugt die statistische Auswertung für ein vorgegebenen Zeitraum durchgeführt werden. Das Rundsteuergerät weist auch eine automatische Überwachung der Informationsübertragung auf, so daß der Hilfsbetrieb gestartet werden kann. Die Überwachung des Übertragungsweges kann nach in der Informationsübertragung üblicher Weise, z. B. durch Kontrolle regelmäßiger Statustelegramme, erfolgen.

Die Rundsteuerbefehle werden also zumindest zeitlich insbesondere auch qualitativ ausgewertet. Zusätzlich zur statistischen Auswertung können dem Rundsteuergerät auch noch eine vorgebbare Anzahl von Informationen von Einflußgrößen des Lastverhaltens zugeführt werden. Dies richtet sich je nach Art des Gerätes sowie nach dem Aufwand der erlaubt ist. Bei einem Rundsteuerempfänger könnte beispielsweise noch ein Eingang zur Eingabe der Tageshelligkeit vorgesehen sein. Die Erzeugung eines Rundsteuerbefehls kann bevorzugt nach gewichteten Merkmalen mittels einer unscharfen Logik erfolgen. Auf diese Weise besteht eine praktikabel Lösung für eine zuverlässige Erzeugung von Rundsteuerbefehlen zur Verfügung, wobei mit verringerten Rechenaufwand eine schnelle Befehlserzeugung gelingt.

Das erfindungsgemäße Verfahren eignet sich insbesondere zum Einsatz in Rundsteueranlagen, insbesondere Rundsteuerunterstationen oder direkt für Rundsteuerempfänger. Bei Verwendung in Rundsteuerempfängern ist die Befehlserzeugung in den einzelnen Empfängern derart aufeinander angepaßt, daß möglichst Schwingungen im Netz verhindert werden. Die Realisierung erfolgt als Programm in einem Rechner eines Rundsteuergerates, welche u. a. Speicher zur Aufnahme der statischen Werte aufweist.

Vorteilhafte Ausgestaltungen ergeben sich aus den Unteransprüchen. Weitere Vorteile der Erfindung werden nachfolgend in einem Ausführungsbeispiel anhand der Zeichnung näher erläutert.

Die Figur zeigt eine Rundsteueranordnung, bei der ausgehend von einem zentralen Kommandogerat 1 über einen Übertragungsweg 2 einer Rundsteuersendeanlage 3 Rundsteuerbefehle übermittelt werden. Unter Kommandogerat wird hier z. B. ein Rundsteuerbefehlsgeber oder auch eine geeignete Netzleitstelle, welche in Datenverbindung mit der Rundsteuersendeanlage 3 steht, verstanden, die ein Auslösen von Rundsteuerbefehlen ermöglichen. Die Rundsteuersendeanlage 3 umfaßt eine Unterstation 4, die im wesentlichen für den Datenverkehr zwischen dem Kommandogerat 1 und der Rundsteuersendeanlage 3 zuständig ist, den eigentlichen Rundsteuersender 5 und eine geeignete Ankoppeleinrichtung 6 zur Ankopplung des Rundsteuersenders 5 an ein elektrisches Versorgungsnetz 7. Der Unterstation 4 kann ein Zeitzeichenempfänger 8 mit Antenne, ggf. auch für einen Satellitenempfang, zugeordnet sein. Das elektrische Versorgungsnetz 7 dient dabei als Informationsübertragungsweg zu den im Versorgungsnetz angeordneten Rundsteuerempfängern E. Diese sind örtlich jeweils den mittels Rundsteuerbefehl ein- oder auszuschaltenden Verbrauchern zugeordnet.

Aufgrund von Störungen, z. B. Ausfall des Kommandogeräts 1, Unterbrechung des Übertragungsweges 2 oder einer sonstigen Störung im elektrischen Versorgungsnetz 7, kann die Übermittlung von Rundsteuerbefehlen von den Kommandogerat zu den Rundsteuerempfängern E unterbrochen sein. Ausgehend von einem zu erwartenden Lastverhalten ist es daher sinnvoll, die Verbraucher im elektrischen Versorgungsnetz 7 zumindest in Annäherung eines verbesserten Netzverhaltens an- oder abzuschalten. Starre Programme, z. B. nach einem vorgegebenen Zeitplan, sind hierzu ungeeignet, da bei Änderungen die Programme in allen Empfängern oder allen Unterstationen geändert werden müssen.

Gemäß dem vorliegenden Verfahren wird daher in dem entsprechenden Rundsteuergerät, entweder in Unterstation 4 oder im Rundsteuerempfänger E, die bei ungestörtem Betrieb einlaufenden Rundsteuerbefehle statistisch nach Art einer Häufigkeitsuntersuchung ausgewertet. Dies kann für ein vorgebbares Zeitfenster, z. B. ein Tag, eine Woche oder ein Monat, erfolgen. Der Rundsteuerempfänger E würde dann mit einem geeigneten Programm beispielsweise feststellen, daß er Werktags etwa zur Mittagszeit und an Wochenenden ganztägig eingeschaltet ist. Der Rundsteuerempfänger E verwendet diese Erkenntnis bei einem Ausfall der Informationsübertragung zum selbständigen Bilden von Rundsteuerbefehlen, nach denen er dann selbständig bis zur Wiederherstellung der Informationsübertragung den Verbraucher steuert. Das Rundsteuergerät weist dazu eine Überwachungsfunktion auf, die bei Registrierung eines Ausfalls den Hilfsbetrieb aktiviert. Dabei kann es von Vorteil sein, wenn die Auswertung und Erzeugung von Rundsteuerbefehlen mittels einer unscharfen Wertung, z. B. mit Hilfe eines Fuzzy-Gliedes, erfolgt. Auf diese Weise kann das Steuerverhalten des Rundsteuergerätes mit einfachen linguistischen Beschreibungen definiert werden.

Bevorzugt können dem jeweiligen Rundsteuergerat auch noch zusätzliche vor Ort verfügbare Informationen über Einflußgrößen des Lastverhaltens als Meßsignal zugeführt werden (beispielsweise die Helligkeit, die Umgebungstemperatur oder auch die Zeit). Für kurze Ausfallzeiten kann in dem jeweiligen Rundsteuergerät auch eine Zeituhr integriert sein, die wahlweise auch über ein Signaleingang synchronisiert werden kann. Bei der Bildung von Hilfsbefehlen in der Unterstation 4 muß zusätzlich eine selektive Betrachtung und Erzeugung der Rundsteuerbefehlen erfolgen, da diese je nach benötigter Leistung unterschiedlichen Verbrauchern zugeordnet sein können. Dabei kann es erforderlich sein, daß innerhalb der Unterstation 4 Entscheidungen über die Anzahl der zu steuernden Verbraucher, der Zeitpunkt der Schalthandlung und die damit verbundene Leistungsänderung getroffen werden.

## Patentansprüche

1. Verfahren zum Betrieb eines Rundsteuergerätes (4,E), dem Rundsteuerbefehle zugeführt werden, wobei
- eingehende Rundsteuerbefehle fortlaufend erfaßt und statistisch ausgewertet werden,
- die Informationsübertragung auf Funktion überwacht wird und
- bei Ausfall der Informationsübertragung ausgehend von den statistisch ausgewerteten Befehlen automatisch Hilfsbefehle zum Ein- oder Ausschalten zumindest eines Verbrauchers erzeugt werden.

2. Verfahren nach Anspruch 1, wobei die eingehenden Rundsteuerbefehle zumindest zeitlich, ausgewertet werden.

3. Verfahren nach Anspruch 2, wobei die Rundsteuerbefehle auch qualitativ ausgewertet werden.

4. Verfahren nach Anspruch 1, 2 oder 3, wobei die in einem vorgebbare Zeitfenster eingehenden Rundsteuerbefehle statistisch ausgewertet werden.

5. Verfahren nach einem der Ansprüche 1 bis 4, wobei zur statistischen Auswertung oder zur Befehlserzeugung dem Rundsteuergerät (4,E) Meßsignale der Einflußgrößen des Energieverbrauchs zugeführt werden.

6. Verfahren nach einem der Ansprüche 1 bis 5, wobei die Erzeugung eines Hilfsbefehls nach gewichteten Merkmalen mittels einer unscharfen Logik erfolgt.

7. Verfahren nach einem der Ansprüche 1 bis 6, wobei das Rundsteuergerät (4,E) als Rundsteuerunterstation (4) oder Rundsteuerempfänger (4) ausgebildet ist.

8. Verfahren nach Anspruch 7, wobei die Erzeugung von Hilfsbefehlen in unterschiedlichen in einem gemeinsamen elektrischen Netz (7) angeordneten Rundsteuerempfängern (E) derart, insbesondere zu unterschiedlichen Zeitpunkten, erfolgt, daß Schwingungen im Netz (7) vermieden werden.

9. Rundsteuergerät (4,E), dem Rundsteuerbefehle zuführbar sind, mit einem Rechner und einem diesem zugeordneten Speicher, wobei
- der Rechner eingehende Rundsteuerbefehle fortlaufend erfaßt und mittels eines Programms eine statistische Auswertung durchführt,
- eine Funktionsüberwachung der Informationsübertragung vorgesehen ist und
- bei Ausfall der Informationsübertragung der Rechner ausgehend von den statistisch ausgewerteten Befehlen automatisch zumindest einen Hilfsbefehl zum Ein- oder Ausschalten zumindest eines Verbrauchers erzeugt.

10. Rundsteuergerät nach Anspruch 9, welches als Rundsteuerempfänger oder Rundsteuerunterstation ausgebildet ist.

## Claims

1. Method for the operation of a ripple control device (4,E) to which ripple control commands are supplied, whereby
- entering ripple control commands are continuously detected and are statistically evaluated,
- the information transmission is monitored with respect to function, and
- in the event of failure of the information transmission, proceeding from the statistically evaluated commands auxiliary commands for connection or disconnection of at least one consumer are automatically generated.

2. Method according to claim 1, whereby the entering ripple control commands are evaluated at least with respect to time.

3. Method according to claim 2, whereby the ripple control commands are also qualitatively evaluated.

4. Method according to claim 1, 2 or 3, whereby the ripple control commands entering a specifiable time window are statistically evaluated.

5. Method according to one of claims 1 to 4, whereby, for statistical evaluation or for command generation, measuring signals of the influencing variables of the power consumption are supplied to the ripple control device (4,E).

6. Method according to one of claims 1 to 5, whereby the generation of an auxiliary command takes place according to weighted features by means of fuzzy logic.

7. Method according to one of claims 1 to 6, whereby the ripple control device (4,E) is constructed as a ripple control substation (4) or a ripple control receiver (4).

8. Method according to claim 7, whereby the generation of auxiliary commands in different ripple control receivers (E) arranged in a common electrical system (7) takes place in such a way, in particular at different instants, that oscillations in the system (7) are avoided.

9. Ripple control device (4,E) to which ripple control commands can be supplied, having a computer and a memory allocated thereto, whereby
- the computer continuously detects entering ripple control commands and carries out a statistical evaluation by means of a program,
- a function monitoring of the information transmission is provided, and
- in the event of failure of the information transmission, proceeding from the statistically evaluated commands the computer automatically generates at least one auxiliary command for the connection or disconnection of at least one consumer.

10. Ripple control device according to claim 9, which is constructed as a ripple control receiver or a ripple control substation.

## Revendications

1. Procédé pour faire fonctionner un appareil (4, E) de télécommande centralisée, auquel sont envoyées des instructions de télécommande centralisée,
- les instructions de télécommande centralisée qui arrivent étant détectées en permanence et évaluées du point de vue statistique,
- le fonctionnement de la transmission d'informations étant surveillé et
- en cas de panne de la transmission d'informations, des instructions auxiliaires étant produites automatiquement à partir des instructions exploitées statistiquement en vue de brancher ou de débrancher au moins un appareil utilisateur.

2. Procédé suivant la revendication 1, dans lequel les instructions de commande centralisée qui arrivent sont exploitées au moins du point de vue temporel.

3. Procédé suivant la revendication 2, dans lequel les instructions de télécommande centralisée sont exploitées aussi du point de vue qualitatif.

4. Procédé suivant la revendication 1, 2 ou 3, dans lequel les instructions de télécommande centralisée qui arrivent dans une fenêtre temporelle pouvant être prescrite sont exploitées du point de vue statistique.

5. Procédé suivant l'une des revendications 1 à 4, dans lequel des signaux de mesure des grandeurs d'influence de la consommation de courant sont envoyés pour l'exploitation statistique ou pour la production d'instructions à l'appareil (4, E) de télécommande centralisée.

6. Procédé suivant l'une des revendications 1 à 5, dans lequel la production d'une instruction auxiliaire s'effectue suivant des caractéristiques pondérées au moyen d'une logique floue.

7. Procédé suivant l'une des revendications 1 à 6, dans lequel l'appareil (4, E) de télécommande centralisée est réalisé en sous-poste (4) de commande centralisée ou en récepteur (4) de télécommande centralisée.

8. Procédé suivant la revendication 7, dans lequel la production d'instructions auxiliaires s'effectue dans différents récepteurs (E) de télécommande centralisée montés dans un réseau (7) électrique commun de telle manière, notamment à des instants différents, que des oscillations dans le réseau (7) peuvent être empêchées.

9. Appareil (4, E) de télécommande centralisée auquel peuvent être envoyées des instructions de télécommande centralisée et qui comporte un ordinateur et une mémoire associée à cet ordinateur, dans lequel
- l'ordinateur détecte en permanence des instructions de télécommande centralisée qui arrivent et effectue, au moyen d'un programme, une exploitation statistique,
- une surveillance de la fonction de la transmission d'informations est prévue, et
- en cas de panne de la transmission d'informations, l'ordinateur produit automatiquement à partir des instructions exploitées statistiquement au moins une instruction auxiliaire en vue de brancher ou de débrancher au moins un appareil utilisateur.

10. Appareil de télécommande centralisée suivant la revendication 9, qui est réalisé en récepteur de télécommande centralisée ou en sous-poste de télécommande centralisée.
